# EUROPEAN PATENT SPECIFICATION

(11) **EP 2 965 799 B1**
(45) Date of publication and mention of the grant of the patent: **27.02.2019**
(21) Application number: 15174576.7
(22) Date of filing: 30.06.2015
(51) Int. Cl.: B01D 46/00, B01D 46/44

(54) **METHOD AND DEVICE FOR CLEANING FILTERS**
VERFAHREN UND VORRICHTUNG ZUM ABREINIGEN VON FILTERN
PROCÉDÉ ET DISPOSITIF DE RÉGÉNÉRATION DES ÉLÉMENTS FILTRANTS

(30) Priority: 07.07.2014 FI 20145653
(43) Date of publication of application: 13.01.2016
(73) Proprietor: Valmet Technologies Oy, 02150 Espoo (FI)
(72) Inventor: Isaksson, Juhani, 02150 Espoo (FI); Keitaanniemi, Piia, 02150 Espoo (FI); Helanti, Vesa, 02150 Espoo (FI)
(74) Representative: Kolster Oy Ab

(56) References cited:
- EP-A2- 1 036 586
- US-A- 5 643 539
- US-A1- 2008 127 824

## Description

### Background

The invention relates to an arrangement for cleaning a filter apparatus arranged to a product gas line of a plant producing product gas.

The invention also relates to a method for cleaning a filter apparatus arranged to a product gas line of a plant producing product gas.

Product gas is filtered in plants producing product gas in order to remove particles contained in the gas. Impurities in product gas may block the filter elements. Dirt consisting of carbon and hydrocarbons, "tars", may accumulate in the filters. It is known in the art to remove the dirt by driving the process in oxidizing conditions, if necessary, to clean the filters.

Driving the process in oxidizing conditions causes combustion in carbon and hydrocarbon layers, thus producing high temperatures and great local and temporal temperature variations. The temperature of the filters may locally exceed the capacity of the filter structures or the filters.

Oxygen content may be controlled by feeding inert gas into the gas flow, although most often the availability of inert gas restricts the feed volume. As a further consequence, the filters must be cleaned using a low total flow, and the cleaning is extremely slow. Moreover, a low flow is poorly distributed to the filters, thus leading to an non-uniform filtering result.

Difficult process manageability often leads to local overheating and thus to damages in the filters, which in turn reduce the usability of the filters. The regeneration of filters is disclosed in US 2008/0127824 and US 5,643,539.

### Brief description

The arrangement and method of the invention are characterized by what is disclosed in the characterizing parts of the independent claims. Other embodiments of the invention are characterised by what is disclosed in the other claims.

Inventive embodiments are also disclosed in the specification and drawings of this application.

The idea of the invention is to regenerate a filter by oxidizing dirt accumulated on the filter by controlling the oxygen content of the regeneration gas.

In the following, features of some embodiments of the invention are listed in a random order:

According to an embodiment, the arrangement comprises measuring means for measuring oxygen content in the regeneration gas that is to be fed into the filter and/or that has passed through the filter, measuring means for measuring the temperature of the regeneration gas that is to be fed into the filter and/or that has passed through the filter, and, in addition, adjusting means for adjusting a control gas flow on the basis of the above measurements. An advantage is that overheating of the filter may be avoided and that it is possible to detect when the filter has been cleaned and the regeneration may be stopped.

According to an embodiment, the closing means comprise a first closing arrangement in the product gas line, before the feed channel, and a second closing arrangement in the product gas line, after the discharge channel. An advantage is that the filter may be separated from the product gas line.

According to an embodiment, the regeneration means comprise a fan for forcing the regeneration gas through the filter and/or a heater for controlling the temperature of the regeneration gas. An advantage is that the regeneration of the filter may be speeded up and the regeneration process optimized.

According to an embodiment, the control gas to be used is oxygen or a gas mixture comprising oxygen, such as air or flue gas. An advantage is that dirt left in the filter may be oxidized in a controlled manner.

According to an embodiment, the arrangement further comprises scavenging means for scavenging a filter separated from the product gas line by inert scavenging gas, such as carbon dioxide, nitrogen or water vapour. An advantage is that compounds harmful to regeneration or its regeneration process can be removed prior to the actual regeneration.

The channel system comprises a recirculation channel arranged between the discharge channel and the feed channel to recirculate into the feed channel regeneration gas that has passed through the filter. An advantage is that the temperature and composition of the regeneration gas may be controlled better and higher flow rates may be obtained without using a great volume of regeneration gas.

According to an embodiment, the filter apparatus comprises a plural number of parallel filters grouped into at least two cleaning groups and the cleaning is arranged to take place according to cleaning groups. An advantage is that production of the product gas may be continued during the cleaning process.

According to an embodiment, the regeneration gas flow rate is at least equal to a normal product gas flow through the filter in question. An advantage is that this allows the cleaning process to be speeded up and, at the same time, it is possible to target the cleaning process uniformly on different areas of the filter.

According to an embodiment, the regeneration gas flow rate is lower than a normal product gas flow rate through the filter in question. An advantage is that the equipment required by the arrangement may be dimensioned to fit even in tight spaces and according to the regeneration needed.

The regeneration gas flown through the filter is cooled. An advantage is that overheating of the filter and the arrangement may be avoided.

According to an embodiment, the regeneration gas to be conveyed through the filter is heated. An advantage is that the activation of the cleaning process may be speeded up.

According to an embodiment, the regeneration gas may be fed through the filter in the product gas flow direction or in an opposite direction. An advantage is that the arrangement is easily adjustable according to requirements of the application site.

### Brief description of the drawings

The invention will be described in greater detail with reference to the attached drawings, in which
Figure 1 is a schematic view of an arrangement and method applied to a plant producing hot product gas;
Figure 2 is a schematic view of an arrangement and method not in accordance with the present invention;
Figures 3a, 3b are schematic views of some arrangements and methods; and
Figures 4a, 4b are schematic views of some embodiments of an arrangement and method.

In the figures, the invention is shown simplified for the sake of clarity. In the figures, like reference numerals identify like elements.

### Detailed description

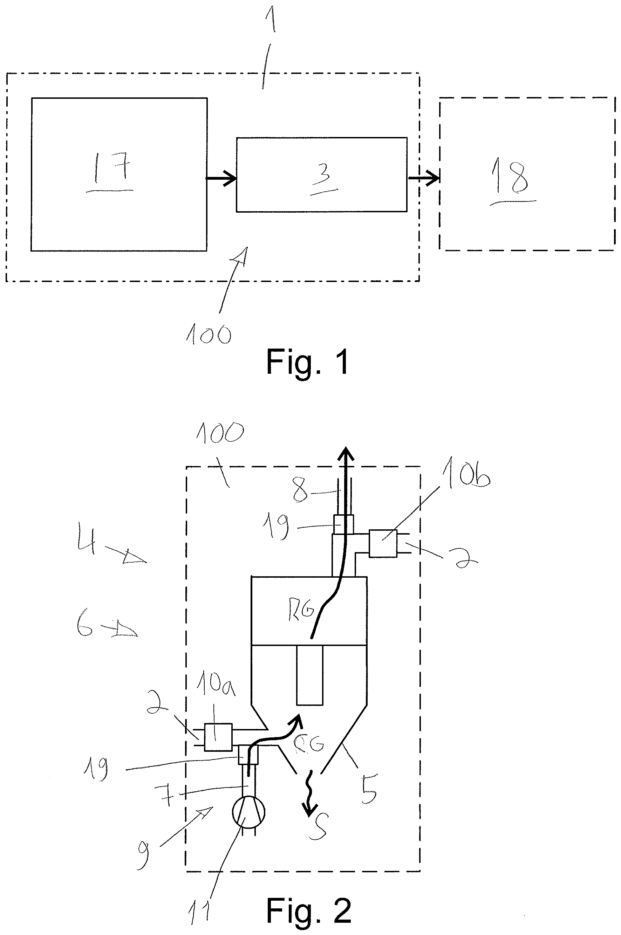

Figure 1 is a schematic view of an arrangement and method applied to a plant producing hot product gas.

In the figure, a plant 1 producing product gas is depicted by a line of dots and dashes. The plant in question comprises a product gas production unit 17, which may be a gasification plant or a pyrolysis plant, for example, known per se.

The product gas producing plant 1 further comprises a product gas line 2 along which the product gas produced by a producing unit 17 is conveyed for use at a product gas utilization unit 18. The utilization unit 18 may be arranged close to the product gas producing plant 1, or, it may be further away, in which case the product gas is delivered to the utilization unit 18 by a prior art method known per se. The product gas produced by the product gas producing plant 1 may be delivered for use in one or more utilization units 18.

The product gas producing plant 1 comprises a filter apparatus 3 arranged to the product gas line 2 to purify the product gas in order to remove particles contained therein. In association with the filter apparatus 3, there is an arrangement 100 arranged to clean or regenerate the filters of the filter apparatus 3.

Figure 2 is a schematic sectional view of an arrangement and a method for cleaning filters.

The arrangement 100 includes a channel system 6 connected to a filter 5 and comprising a feed channel 7 and a discharge channel 8. The feed channel 7 and the discharge channel 8 are preferably connected to the filter 5 through closing means 19, such as closing valves.

The arrangement 100 comprises closing means 4 with which the filter 5 of the filter apparatus 3 that is to be cleaned may be separated from the product gas line 2. In the present embodiment the closing means 4 comprise a first closing arrangement 10a, which is arranged to the product gas line 2 before the feed channel 7, and a second closing arrangement 10b, which is arranged to the product gas line 2 after the discharge channel 8. The closing arrangement 10a, 10b may comprise e.g. a valve, sliding trap or welded blind flange that may be installed as a block into the product gas line 2.

The arrangement 100 further comprises regeneration means 9 for feeding control gas CG containing oxygen through the feed channel 7 into the filter 5 separated from the product gas line 2. In this embodiment the control gas CG forms the gas that cleans the filter, i.e. the regeneration gas. The regeneration means 9 may comprise a fan 11 that generates a pressure difference for forcing the regeneration gas RG through the filter 5.

Said control gas may be a gas mixture comprising oxygen, for example, such as air or flue gas. By adjusting the oxygen content it is possible to control a temperature rise taking place during the cleaning in the filter 5. At least some of the material remaining in the filter 5 becomes oxidized by the influence of the regeneration gas RG. The target value for the temperature rise is case-specific and depends on the allowed temperatures of the filter 5. The target temperature may be 350°C, for example, although it is preferably equal to the highest operating temperature of the filter 5 at the most. Within this temperature range, the most typical oxidation processes take place rapidly. According to an idea, the oxygen content of the regeneration gas RG entering the filter 5 is 5 % at the most.

According to an idea, the flow rate of the regeneration gas RG through the filter 5 is adjusted to be at least equal to a normal product gas flow rate through said filter 5. In some cases the flow rate of the regeneration gas RG is lower than that of normal product gas. To put it briefly, the volume of gas is dimensioned so as to achieve a desired regeneration time, and hence the flow rate may be higher than, equal to or lower than the flow rate in a normal operating situation.

According to an idea, the flow rate of the regeneration gas RG through the filter 5 is adjusted to be a lot higher than a normal product gas flow rate. An advantage is that the this allows to speed up the cleaning process and, at the same time, the cleaning process can be targeted more uniformly on the filter 5, because a high flow rate forces the regeneration gas RG onto all filter surfaces of the filter 5.

The regeneration gas RG and the gaseous oxidation products, i.e. flue gases, detached from the filter and flowing with the gas exit the arrangement 100 through the discharge channel 8. The discharge channel 8 may lead into a suitable place, such as a torch, power boiler, or the like, in which the flue gases may be processed to the extent necessary in order to be conveyed outdoors. Naturally, the discharge channel 8 may convey flue gases directly outdoors.

In connection with the regeneration also solids S may be created; these may be removed from the filter on an ordinary route known per se.

The basic principle of the method may be as follows:
a) filter 5 is separated from the product gas line 2 by closing means 4,
b) oxygen-containing control gas CG is fed into the filter 5 separated from the product gas line 2, the gas forming at least part of the regeneration gas RG to be conveyed through the filter 5,
c) the regeneration gas RG oxidizes the oxidizing dirt remaining in the filter 5, and
d) the regeneration gas RG that has passed through the filter and the oxidization products are removed from the filter 5 through the discharge channel 8.

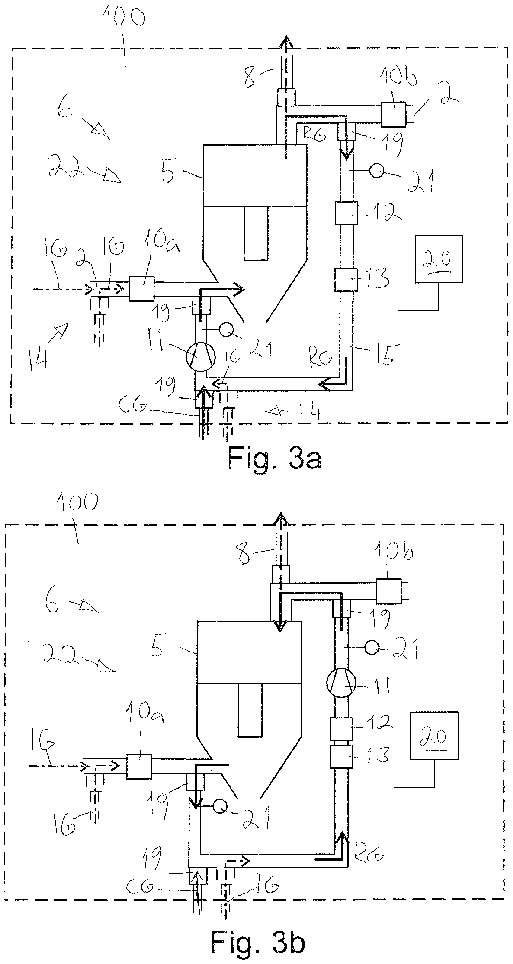

Figure 3a is a schematic view of an arrangement and method, and Figure 3b of an arrangement and method, which differs from the one in Figure 3a for the circulation direction of the regeneration gas RG. In Figure 3a the regeneration gas RG flows through the filter 5 in the same direction as the product gas. In Figure 3b the flow direction is reverse, i.e. opposite to the flow direction of the product gas.

Also in the arrangement and method of Figure 2 the regeneration gas RG may be fed into the filter 5 in a direction opposite to the flow direction of the product gas.

The channel system 6 of the arrangement 100 now comprises a recirculation channel 15 arranged between the discharge channel 8 and the feed channel 7. The recirculation channel 15 circulates the regeneration gas RG that has passed through the filter 5 back into the feed channel 7 and from there back to the filter 5. Some of the regeneration gas RG that has passed through the filter 5 is conveyed through the discharge channel 8 out of the arrangement 100. This leaving portion is replaced by feeding replacement control gas CG into the feed channel 7. An advantage of the recirculation channel 15 is that the temperature and composition of the regeneration gas may be controlled better and higher flow rates may be obtained without using a great volume of control gas CG.

The arrangement 100 shown in Figures 3a, 3b also comprises scavenging means 14 through which inert scavenging gas IG, which may be e.g. carbon dioxide, nitrogen or water vapour, is fed into the filter 5 separated from the product gas line 2.

The inert scavenging gas IG is preferably fed from the product gas line 2, for example from the production unit 17, or through a feed channel to be opened to the product gas line 2. The inert scavenging gas IG may also be fed into the channel system 6.

Inert scavenging gas IG is preferably fed before feeding regeneration gas RG into the channel system 6 and the filter 5. With the scavenging gas IG the channel system 6 and the filter become cleared of substantially all product gas, the mixture components of which might interfere with the oxidizing reactions during the actual cleaning phase and the controlled temperature adjustment.

When the feeding of the scavenging gas IG is stopped and that of the control gas CG is started, the content of the regeneration gas RG circulating in the filter 5 and the recirculation channel 15 changes gradually, and oxidization products, such as carbon dioxide, become mixed with it as a result of the oxidization of dirt.

It should be noted at this point that some embodiments of the arrangement 100 of Figure 2 also comprise scavenging means 14 for feeding inert scavenging gas IG.

The cleaning method typically generates heat, which increases the temperature of the regeneration gas RG as it passes through the filter 5. Excess heat energy may be discharged from the circulation in a cooler 12. The cooler 12 may be a heat exchanger known per se and capable of transferring heat energy for use or releasing it in the environment.

The regeneration means 9 may further comprise a heater 13 with which the temperature of the filter 5 may be increased to a level required by the regeneration reactions. This may be necessary at least at the beginning of the regeneration process. According to an idea, the cooler 12 and the heater 13 are one and the same device that is suitably controlled according to process demands. It should be noted at this point that some embodiments of the arrangement 100 of Figure 2 also comprise a cooler 12 and/or a heater 13.

The operation of the arrangement 100 is controlled by control means 20. The control means 20 are used e.g. for controlling adjusting means 22 which are used for adjusting the oxygen content, temperature and flow rate of the regeneration gas RG. The operation of the arrangement 100 may be fully automated, although alternatively at least some of the measures required by the method are controlled manually. The state of the cleaning process and the functioning of the arrangement 100 are preferably controlled by measuring devices 21 that may measure temperature, flow rate, pressure, oxygen content etc.

When carried out with the arrangement of Figure 3a or 3b, the regeneration process may proceed as disclosed below, for example.
1. Inert scavenging gas IG is fed until an ambiance suitable for activating the regeneration is achieved in the channel system 6 and the filter 5, and the scavenging gas conduits are shut off.
2. The channel system 6 and the filter 5 are separated from the product gas line 2 with closing arrangements 10a, 10b.
3. The closing means 19 are opened and feeding of the control gas CG into the channel system 6 is started. At first, the oxygen content of the regeneration gas entering the filter 5 may be very low or even at zero.
4. The regeneration gas RG is circulated in the channel system 6 and the filter 5. At first the regeneration gas RG is a mixture of the control gas CG and the scavenging gas IG that was in the channel system 6 and the filter 5 but, as the regeneration reactions start, oxidization products and the like gradually mix with it. In order to get the regeneration reactions activated, the regeneration gas RG may be heated, if necessary, with a heater 13. The use of the heater 13 may be stopped when the reactions increase the temperature of the arrangement 100 to a suitable level.
5. During the entire process temperatures prevailing in the arrangement 100 are measured. If there is a risk of the temperature rising too high, the amount of oxygen to be fed is reduced. This may be carried out by reducing either the flow rate or the oxygen content of the control gas CG. On the other hand, if the temperature drops too much, the amount of the oxygen to be fed is increased.
6. The discharge channel 8 is opened at a suitable point in order to remove the regeneration gas RG and dirt and/or oxidation products carried by the gas. If required, the flow rate of the discharge channel 8 may be adjusted.
7. When the temperature of the arrangement 100 stops rising even though the amount of oxygen fed is increased, the filter 5 is clean of oxidizing dirt. The cleaning process may thus be ended and the filter 5 reconnected to the product gas line 2.

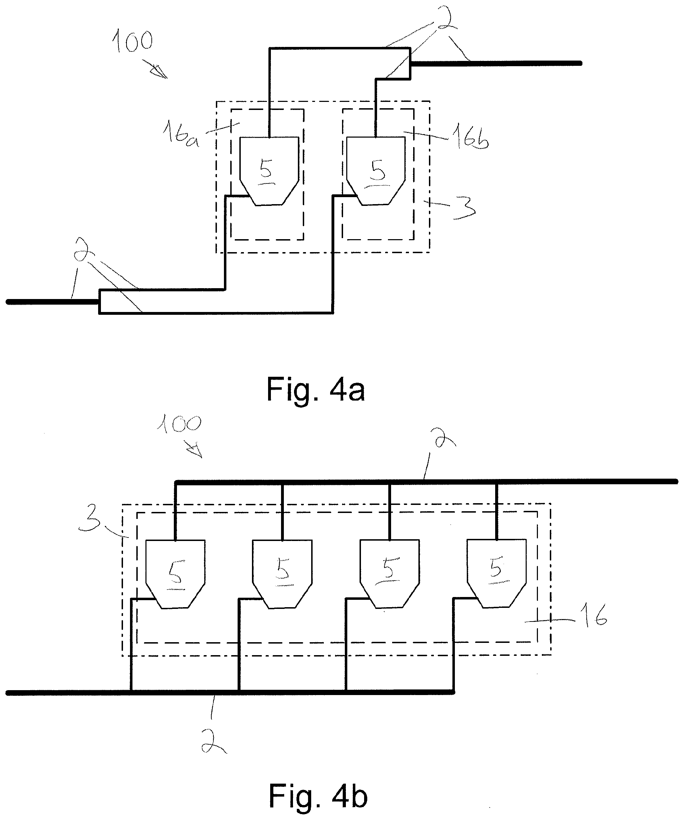

Figures 4a, 4b are schematic views of some embodiments of the arrangement and method. It should be noted that only the main lines of the arrangements are shown to simplify the presentation of the matter.

The filter apparatus 3 arranged to the product gas line may comprise a plural number of parallel filters 5 to which the product gas to be filtered is distributed for purification. According to an idea, these filters 5 are divided into a plural number of, at least two, cleaning groups 16a, 16b and the cleaning is arranged to take place one cleaning group at a time. In that case only some of the filters 5 in the filter apparatus 3 are separated for cleaning, whereas the rest of the filters 5 in the filter apparatus 3 are left for use in product gas filtering.

The embodiment of the arrangement 100 shown in Figure 4a has two cleaning groups 16a, 16b, with one filter 5 in each. Now it is possible to take e.g. the first cleaning group 16a, i.e. the filter 5 contained therein, for cleaning. When the first cleaning group 16a is being cleaned, the second cleaning group 16b may, at the same time, filter product gas. And vice versa. It is thus possible to continue the production of product gas despite the cleaning process. It should be noted that the cleaning group 16a, 16b may even have a plural number of filters 5. The number of the cleaning groups may naturally be greater than two. Likewise, it is evident that all the cleaning groups 16a, 16b may also be cleaned simultaneously.

Figure 4b illustrates an embodiment with a plurality of filters, in this case four filters 5, arranged into one cleaning group 16. The four filters 5 are all cleaned simultaneously.

It should be noted that the shape and structure of the filter 5 may vary. The filter 5 may comprise a filter hose, filter candle, etc. The filtering material may be metal, ceramic, ceramic non-woven fabric or non-woven mat, etc.

In some cases, features disclosed in this application may be used as such, regardless of other features. On the other hand, when necessary, features disclosed in this application may be combined in order to provide different combinations.

In summary, the arrangement of the invention is characterised in that it comprises: closing means for separating a filter of the filter apparatus from the product gas line, a channel system connected to the filter and comprising a feed channel and a discharge channel, regeneration means for feeding oxygen-containing control gas through the feed channel into the filter separated from the product gas line, the control gas forming at least part of the regeneration gas cleaning the filter, and the discharge channel being arranged to remove from the arrangement regeneration gas that has passed through the filter and material detached from the filter and flowing with the gas.

The method of the invention, in turn, is characterised by: separating a filter of the filter apparatus from the product gas line with closing means, feeding oxygen-containing control gas into the filter separated from the product gas line, the control gas forming at least part of the regeneration gas cleaning the filter, and removing from the filter the regeneration gas that has passed through the filter.

The drawings and the related description are only intended to illustrate the idea of the invention. It will be apparent to a person skilled in the art that the invention is not restricted to the above-described embodiments disclosing the invention through some examples, but various modifications and different applications of the invention are feasible within the inventive idea defined in the accompanying claims.

### Reference numbers

- 1: plant producing product gas
- 2: product gas line
- 3: filter apparatus
- 4: closing means
- 5: filter
- 6: channel system
- 7: feed channel
- 8: discharge channel
- 9: regeneration means
- 10a, 10b: closing arrangement
- 11: fan
- 12: cooler
- 13: heater
- 14: scavenging means
- 15: recirculation channel
- 16, 16a, 16b: cleaning group
- 17: product gas production unit
- 18: product gas utilization unit
- 19: closing means
- 20: control means
- 21: measuring device
- 22: adjusting means

- 100: arrangement

- IG: inert scavenging gas
- CG: control gas
- RG: regeneration gas
- S: solids

## Claims

1. An arrangement for cleaning a filter apparatus (3) arranged to a product gas line (2) of a product gas producing plant (1), the arrangement (100) comprising:
closing means (4) for separating a filter (5) of the filter apparatus (3) from the product gas line (2);
a channel system (6) connected to the filter (5) and comprising a feed channel (7) and a discharge channel (8);
regeneration means (9) for feeding oxygen-containing control gas (CG) via the feed channel (7) into the filter (5) separated from the product gas line (2), which
control gas (CG) forms at least part of the regeneration gas (RG) cleaning the filter (5), and which
discharge channel (8) is arranged for removing from the arrangement (100) regeneration gas (RG) that has passed though the filter (5) and the oxidized material flowing with it, **characterized in that**
the arrangement (100) comprises a cooler (12) for controlling the temperature of the regeneration gas, and that
the channel system (6) comprises a recirculation channel (15) arranged between the discharge channel (8) and the feed channel (7) for recirculating into the feed channel (7) the regeneration gas (RG) that has passed through the filter (5).

2. An arrangement as claimed in claim 1, comprising
measuring means (21) for measuring oxygen content of the regeneration gas (RG) to be fed into the filter (5) and/or that has passed through the filter (5) and
measuring means (21) for measuring the temperature of the regeneration gas (RG) to be fed into the filter (5) and/or that has passed through the filter (5) and
adjusting means (22) for adjusting the flow rate and/or composition of the control gas (CG) on the basis of said measurements.

3. An arrangement as claimed in claim 1 or 2, wherein the closing means (4) comprise a first closing arrangement (10a) arranged to the product gas line (2) before the feed channel (7) and a second closing arrangement (10b) arranged to the product gas line (2) after the discharge channel (8).

4. An arrangement as claimed in any one of the preceding claims, wherein the regeneration means (9) comprise a fan (11) for forcing the control gas (CG) through the filter (5) and/or a heater (13) for controlling the temperature of the regeneration gas.

5. An arrangement as claimed in any one of the preceding claims, wherein the control gas (CG) to be used is oxygen or a gas mixture, such as air or flue gas, comprising oxygen.

6. An arrangement as claimed in any one of the preceding claims, the arrangement further comprising scavenging means (14) for scavenging the filter (5) separated from the product gas line (2) with inert scavenging gas (IG), the inert scavenging gas (IG) comprising carbon dioxide, nitrogen or water vapour, for example.

7. An arrangement as claimed in any one of the preceding claims, wherein the filter apparatus (3) comprises a plural number of parallel filters (5) grouped into at least two cleaning groups (16a, 16b) and in that the cleaning has been arranged to take place according to cleaning groups (16a, 16b).

8. A method for cleaning a filter apparatus (3) arranged to a product gas line (2) of a product gas producing plant (1), the method comprising the steps of
separating a filter (5) of the filter apparatus (3) from the product gas line (2) with closing means (4);
feeding oxygen-containing control gas (CG) into the filter (5) separated from the product gas line (2), the control gas (CG) forming at least part of the regeneration gas (RG) cleaning the filter (5); and
removing from the filter (5) the regeneration gas (RG) that has passed through the filter (5), **characterized by**
cooling the regeneration gas (RG) that has flowed through the filter (5), and
recirculating at least some of the regeneration gas (RG) that has passed through the filter (5) back to said filter (5).

9. A method as claimed in claim 8 comprising the steps of
- measuring oxygen content of the regeneration gas (RG) to be fed into the filter (5) and/or that has passed through the filter (5); and
- measuring the temperature of the regeneration gas (RG) to be fed into the filter (5) and/or that has passed through the filter (5); and
- adjusting the temperature of the regeneration gas (RG) by changing, when necessary, the flow rate and/or composition of the control gas (CG).

10. A method as claimed in claim 8 or 9, wherein the flow rate of the regeneration gas (RG) is at least equal to a normal product gas flow rate through the filter (5) or wherein the flow rate of the regeneration gas (RG) is lower than a normal product gas flow rate of the product gas through the filter (5).

11. A method as claimed in any one of claims 8 to 10, wherein the regeneration gas (RG) to be conveyed to the filter (5) is heated.

12. A method as claimed in any one of claims 8 to 11, wherein oxygen or oxygen-containing gas mixture, such as air or flue gas, is fed as control gas (CG).

13. A method as claimed in any one of claims 8 to 12, wherein the filter (5) separated from the product gas line (2) is scavenged with inert scavenging gas (IG) before feeding the control gas (CG), the inert scavenging gas (IG) comprising carbon dioxide, nitrogen or water vapour, for example.

14. A method as claimed in anyone of claims 8 to 13, wherein only some of the filters (5) of the filter apparatus (3) at a time are separated for cleaning, the rest of the filters (5) in the filter apparatus (3) remaining in use for filtering product gas.

15. A method as claimed in any one of claims 8 to 14, wherein regeneration gas (RG) is fed through the filter (5) in the flow direction of the product gas.

16. A method as claimed in any one of claims 8 to 14, wherein regeneration gas (RG) is fed through the filter (5) in an opposite direction with regard to the flow direction of the product gas.

## Patentansprüche

1. Anordnung zum Reinigen einer Filtervorrichtung (3), die an einer Produktgas-Leitung (2) einer Produktgas-Herstellungsanlage (1) angeordnet ist, wobei die Anordnung (100) umfasst:
eine Verschluss-Einrichtung (4) zum Trennen eines Filters (5) der Filtervorrichtung (3) von der Produktgas-Leitung (2);
ein Kanal-System (6), das mit dem Filter (5) verbunden ist und einen Einleit-Kanal (7) sowie einen Ableit-Kanal (8) umfasst;
eine Regenerations-Einrichtung (9) zum Einleiten von sauerstoffhaltigem Kontrollgas (CG) über den Einleit-Kanal (7) in den von der Produktgas-Leitung (2) getrennten Filter (5),
wobei das Kontrollgas (CG) wenigstens einen Teil des Regenerationsgases (RG) bildet, das den Filter (5) reinigt,
und der Ableit-Kanal (8) zum Entfernen von Regenerationsgas (RG), das den Filter (5) durchlaufen hat, sowie des mit ihm strömenden oxidierenden Materials aus der Anordnung (100) eingerichtet ist, **dadurch gekennzeichnet, dass**
die Anordnung (100) einen Kühler (12) zum Steuern der Temperatur des Regenerationsgases umfasst, und dass
das Kanal-System (6) einen zwischen dem Ableit-Kanal (8) und dem Einleit-Kanal (7) angeordneten Rückleit-Kanal (15) zum Zurückleiten des Regenerationsgases (RG), das den Filter (5) durchlaufen hat, in den Einleit-Kanal (7) umfasst.

2. Anordnung nach Anspruch 1, die umfasst:
eine Mess-Einrichtung (21) zum Messen von Sauerstoffgehalt des Regenerationsgases (RG), das in den Filter (5) eingeleitet werden soll und/oder das den Filter (5) durchlaufen hat, sowie
eine Mess-Einrichtung (21) zum Messen der Temperatur des Regenerationsgases (RG), das in den Filter (5) eingeleitet werden soll und/oder das den Filter (5) durchlaufen hat, und
eine Regulier-Einrichtung (22) zum Regulieren der Strömungsgeschwindigkeit und/oder Zusammensetzung des Kontrollgases (CG) auf Basis der Messungen.

3. Anordnung nach Anspruch 1 oder 2, wobei die Verschluss-Einrichtung (4) eine erste Verschluss-Anordnung (10a),
die an der Produktgas-Leitung (2) vor dem Einleit-Kanal (7) angeordnet ist, und eine zweite Verschluss-Anordnung (10b) umfasst, die an der Produktgas-Leitung (2) nach dem Ableit-Kanal (8) angeordnet ist.

4. Anordnung nach einem der vorangehenden Ansprüche, wobei die Regenerations-Einrichtung (9) ein Gebläse (11), mit dem das Kontrollgas (CG) durch den Filter (5) geleitet wird, und/oder eine Heizeinrichtung (13) umfasst, mit der die Temperatur des Regenerationsgases gesteuert wird.

5. Anordnung nach einem der vorangehenden Ansprüche, wobei das einzusetzende Kontrollgas (CG) Sauerstoff oder ein Gasgemisch, wie Luft oder Abgas, ist, das Sauerstoff enthält.

6. Anordnung nach einem der vorangehenden Ansprüche, wobei die Anordnung des Weiteren eine Spül-Einrichtung (14) zum Spülen des von der Produktgas-Leitung (2) getrennten Filters (5) mit inertem Spülgas (IG) umfasst, und das inerte Spülgas (IG) beispielsweise Kohlendioxid, Stickstoff oder Wasserdampf umfasst.

7. Anordnung nach einem der vorangehenden Ansprüche, wobei die Filtervorrichtung (3) mehrere parallele Filter (5) umfasst, die zu wenigstens 2 Reinigungs-Gruppen (16a, 16b) zusammengefasst sind, und das Reinigen so eingerichtet ist, dass es nach Reinigungs-Gruppen (16a, 16b) stattfindet.

8. Verfahren zum Reinigen einer Filtervorrichtung (3), die an einer Produktgas-Leitung (2) einer Produktgas-Herstellungsanlage (1) angeordnet ist, wobei das Verfahren die folgenden Schritte umfasst:
Trennen eines Filters (5) der Filtervorrichtung (3) von der Produktgas-Leitung (2) mit einer Verschluss-Einrichtung (4);
Einleiten von sauerstoffhaltigem Kontrollgas (CG) in den von der Produktgas-Leitung (2) getrennten Filter (5), wobei das Kontrollgas (CG) wenigstens einen Teil des Regenerationsgases (RG) bildet, das den Filter (5) reinigt; sowie
Entfernen des Regenerationsgases (RG), das den Filter (5) durchlaufen hat, aus dem Filter (5), **gekennzeichnet durch**:
Kühlen des Regenerationsgases (RG), das durch den Filter (5) geströmt ist, und
Zurückleiten wenigstens eines Teils des Regenerationsgases (RG), das den Filter (5) durchlaufen hat, zu dem Filter (5).

9. Verfahren nach Anspruch 8, das die folgenden Schritte umfasst:
- Messen von Sauerstoffgehalt des Regenerationsgases (RG), das in den Filter (5) eingeleitet werden soll und/oder das den Filter (5) durchlaufen hat, sowie
- Messen der Temperatur des Regenerationsgases (RG), das in den Filter (5) eingeleitet werden soll und/oder das den Filter (5) durchlaufen hat, sowie
- Regulieren der Temperatur des Regenerationsgases (RG) durch Ändern der Strömungsgeschwindigkeit und/oder Zusammensetzung des Kontrollgases (CG), wenn dies erforderlich ist.

10. Verfahren nach Anspruch 8 oder 9, wobei die Strömungsgeschwindigkeit des Regenerationsgases (RG) einer normalen Produktgas-Strömungsgeschwindigkeit durch den Filter gleich ist oder die Strömungsgeschwindigkeit des Regenerationsgases (RG) niedriger ist als eine normale Produktgas-Strömungsgeschwindigkeit des Produktgases durch den Filter (5).

11. Verfahren nach einem der Ansprüche 8 bis 10, wobei das zu dem Filter (5) zu leitende Regenerationsgas (RG) erhitzt wird.

12. Verfahren nach einem der Ansprüche 8 bis 11, wobei Sauerstoff oder ein sauerstoffhaltiges Gasgemisch, wie Luft oder Abgas, als Kontrollgas (CG) eingeleitet wird.

13. Verfahren nach einem der Ansprüche 8 bis 12, wobei der von der Produktgas-Leitung (2) getrennte Filter (5) vor Einleiten des Kontrollgases (CG) mit inertem Spülgas (IG) gespült wird, und das inerte Spülgas (IG) beispielsweise Kohlendioxid, Stickstoff oder Wasserdampf umfasst.

14. Verfahren nach einem der Ansprüche 8 bis 13, wobei jeweils nur einige der Filter (5) der Filtervorrichtung (3) zum Reinigen getrennt werden und der Rest der Filter (5) in der Filtervorrichtung (3) weiter zum Filtern von Produktgas eingesetzt wird.

15. Verfahren nach einem der Ansprüche 8 bis 14, wobei Regenerationsgas (RG) in der Strömungsrichtung des Produktgases durch den Filter (5) geleitet wird.

16. Verfahren nach einem der Ansprüche 8 bis 14, wobei Regenerationsgas (RG) in einer der Strömungsrichtung des Produktgases entgegengesetzten Richtung durch den Filter (5) geleitet wird.

## Revendications

1. Équipement pour nettoyer un appareil de filtrage (3) agencé dans une conduite de gaz produit (2) d'une installation de production de gaz produit (1), l'équipement (100) comprenant :
des moyens de fermeture (4) pour séparer un filtre (5) de l'appareil de filtrage (3) et la conduite de gaz produit (2) ;
un système de canaux (6) connecté au filtre (5) et comprenant un canal d'alimentation (7) et un canal de décharge (8) ;
des moyens de régénération (9) pour alimenter un gaz de commande (CG) contenant de l'oxygène via le canal d'alimentation (7) dans le filtre (5) séparé de la conduite de gaz produit (2), lequel
gaz de commande (CG) forme au moins une partie du gaz de régénération (RG) nettoyant le filtre (5), et lequel
canal de décharge (8) est agencé pour retirer de l'équipement (100) le gaz de régénération (RG) qui a traversé le filtre (5) et le matériau oxydé qui s'écoule avec celui-ci, **caractérisé en ce que**
l'équipement (100) comprend un refroidisseur (12) pour commander la température du gaz de régénération, et **en ce que**
le système de canaux (6) comprend un canal de recirculation (15) disposé entre le canal de décharge (8) et le canal d'alimentation (7) pour faire recirculer dans le canal d'alimentation (7) le gaz de régénération (RG) qui a traversé le filtre (5).

2. Équipement selon la revendication 1, comprenant
des moyens de mesure (21) pour mesurer une teneur en oxygène du gaz de régénération (RG) à alimenter dans le filtre (5) et/ou qui a traversé le filtre (5) et
des moyens de mesure (21) pour mesurer la température du gaz de régénération (RG) à alimenter dans le filtre (5) et/ou qui a traversé le filtre (5) et
des moyens d'ajustement (22) pour ajuster le débit et/ou la composition du gaz de commande (CG) sur la base desdites mesures.

3. Équipement selon la revendication 1 ou 2, dans lequel les moyens de fermeture (4) comprennent un premier équipement de fermeture (10a) agencé dans la conduite de gaz produit (2) avant le canal d'alimentation (7) et un second équipement de fermeture (10b) agencé dans la conduite de gaz produit (2) après le canal de décharge (8).

4. Équipement selon l'une quelconque des revendications précédentes, dans lequel les moyens de régénération (9) comprennent un ventilateur (11) pour forcer le gaz de commande (CG) à travers le filtre (5) et/ou un dispositif de chauffage (13) pour commander la température du gaz de régénération.

5. Équipement selon l'une quelconque des revendications précédentes, dans lequel le gaz de commande (CG) à utiliser est de l'oxygène ou un mélange gazeux, tel que de l'air ou un gaz de combustion, comprenant de l'oxygène.

6. Équipement selon l'une quelconque des revendications précédentes, l'équipement comprenant en outre des moyens de balayage (14) pour balayer le filtre (5) séparé de la conduite de gaz produit (2) à l'aide d'un gaz inerte de balayage (IG), le gaz inerte de balayage (IG) comprenant du dioxyde de carbone, de l'azote ou de la vapeur d'eau, par exemple.

7. Équipement selon l'une quelconque des revendications précédentes, dans lequel l'appareil de filtrage (3) comprend plusieurs filtres parallèles (5) groupés en au moins deux groupes de nettoyage (16a, 16b) et en ce que le nettoyage a été conçu pour se dérouler en fonction des groupes de nettoyage (16a, 16b).

8. Procédé de nettoyage d'un appareil de filtrage (3) disposé dans une conduite de gaz produit (2) d'une installation de production de gaz produit (1), le procédé comprenant les étapes consistant à
séparer un filtre (5) de l'appareil de filtrage (3) et la conduite de gaz produit (2) à l'aide de moyens de fermeture (4) ;
alimenter un gaz de commande (CG) contenant de l'oxygène dans le filtre (5) séparé de la conduite de gaz produit (2), le gaz de commande (CG) formant au moins une partie du gaz de régénération (RG) nettoyant le filtre (5) ; et
retirer du filtre (5) le gaz de régénération (RG) qui a traversé le filtre (5), **caractérisé par**
le refroidissement du gaz de régénération (RG) qui s'est écoulé à travers le filtre (5), et
la recirculation d'au moins une partie du gaz de régénération (RG) qui a traversé le filtre (5) en retour vers ledit filtre (5).

9. Procédé selon la revendication 8, comprenant les étapes consistant à
- mesurer une teneur en oxygène du gaz de régénération (RG) à alimenter dans le filtre (5) et/ou qui a traversé le filtre (5) ; et
- mesurer la température du gaz de régénération (RG) à alimenter dans le filtre (5) et/ou qui a traversé le filtre (5) ; et
- ajuster la température du gaz de régénération (RG) en modifiant, lorsque nécessaire, le débit et/ou la composition du gaz de commande (CG).

10. Procédé selon la revendication 8 ou 9, dans lequel le débit du gaz de régénération (RG) est au moins égal à un débit de gaz produit normal à travers le filtre (5) ou dans lequel le débit du gaz de régénération (RG) est inférieur à un débit de gaz produit normal du gaz produit à travers le filtre (5).

11. Procédé selon l'une quelconque des revendications 8 à 10, dans lequel le gaz de régénération (RG) à acheminer jusqu'au filtre (5) est chauffé.

12. Procédé selon l'une quelconque des revendications 8 à 11, dans lequel de l'oxygène ou un mélange gazeux contenant de l'oxygène, tel que de l'air ou un gaz de combustion, est alimenté en tant que gaz de commande (CG).

13. Procédé selon l'une quelconque des revendications 8 à 12, dans lequel le filtre (5) séparé de la conduite de gaz produit (2) est balayé à l'aide d'un gaz inerte de balayage (IG) avant d'alimenter le gaz de commander (CG), le gaz inerte de balayage (IG) comprenant du dioxyde de carbone, de l'azote ou de la vapeur d'eau, par exemple.

14. Procédé selon l'une quelconque des revendications 8 à 13, dans lequel seuls certains des filtres (5) de l'appareil de filtrage (3) sont séparés en même temps pour nettoyage, le reste des filtres (5) dans l'appareil de filtrage (3) restant en utilisation pour filtrer le gaz produit.

15. Procédé selon l'une quelconque des revendications 8 à 14, dans lequel du gaz de régénération (RG) est alimenté à travers le filtre (5) dans la direction d'écoulement du gaz produit.

16. Procédé selon l'une quelconque des revendications 8 à 14, dans lequel du gaz de régénération (RG) est alimenté à travers le filtre (5) dans une direction opposée par rapport à la direction d'écoulement du gaz produit.
